# EUROPÄISCHE PATENTSCHRIFT

(11) **EP 0 974 798 B1**
(45) Veröffentlichungstag und Bekanntmachung des Hinweises auf die Patenterteilung: **12.05.2004**
(21) Anmeldenummer: 99112042.9
(22) Anmeldetag: 22.06.1999
(51) Int. Cl.: F25D 29/00, G08B 13/24

(54) **Gefriergerät**
Freezer
Congélateur

(30) Priorität: 20.07.1998 DE 29812877 U; 19.02.1999 DE 29903032 U
(43) Veröffentlichungstag der Anmeldung: 26.01.2000
(73) Patentinhaber: Liebherr-Hausgeräte Ochsenhausen GmbH, 88416 Ochsenhausen (DE)
(72) Erfinder: Wiest, Mathias, 88416 Hattenburg (DE); Weller, Rudolf, 88448 Oggelsbeuren (DE)
(74) Vertreter: Gossel, Hans K., Dipl.-Ing.

(56) Entgegenhaltungen:
- WO-A-98/11504
- DE-A- 4 341 880
- DE-A- 4 418 005
- FR-A- 2 734 381
- FR-A- 2 786 876
- US-A- 4 059 831
- US-A- 5 629 981
- US-A- 5 798 694
- US-A- 5 969 606

## Beschreibung

Die Erfindung betrifft ein Gefriergerät mit Fächern und/oder Schubladen zum Einlagem tiefgefrorener Lebensmittel.

Sowohl im Handel und in Verkaufsstätten als auch im Haushalt werden tiefgefrorene Lebensmittel, eingelagert, deren Haltbarkeit durch deren Verfallsdaten gekennzeichnet ist. Hierbei bereitet es Schwierigkeiten, einen Überblick über die Verfallsdaten und die noch vorrätigen Mengen der in dem Gefriergerät befindlichen Lebensmittel zu erhalten.

Bei gewerblichen Gefriergeräten, beispielsweise Gefriertruhen, ist es ein besonderes Problem, die Waren nach ihren Verfallsdaten anzuordnen und rechtzeitig Waren zu erkennen, die sich ihrem Verfallsdatum nähern. Um in gewerblichen Gefriergeräten die Güter nach aktuellen Verfallsdaten zu ordnen, müssen aufwendige Inventarlisten angefertigt werden. Weiterhin ist häufig eine Umschichtung der Güter nach Verfallsdaten notwendig.

Bei Haushaltsgefriergeräten bereitet es ebenfalls Schwierigkeiten, einen Überblick über die Verfallsdaten und noch vorrätigen Mengen der in dem Gefriergerät befindlichen Lebensmittel zu erhalten, weil die Güter üblicherweise in Schubladen mit undurchsichtigen Wänden bevorratet sind. Um einen Überblick über diese Güter zu erhalten, ist es notwendig, sämtliche Schubläden zu kontrollieren, was mit einem erheblichen Kälteverlust verbunden ist, da die Gefriergeräte für längere Zeit zur Überprüfung und neuen Einordnung der Güter geöffnet werden müssen.

Aufgabe der Erfindung ist es deshalb, ein Gefriergerät zu schaffen, das es dem Betreiber oder Benutzer ohne größeren Aufwand ermöglicht, sich einen Überblick über die in dem Gefriergerät befindlichen Waren zu verschaffen.

Diese Aufgabe wird mit einem Gefriergerät mit den Merkmalen des Anspruches 1 gelöst. Die Unteransprüche sind auf vorteilhafte Ausgestaltungen gerichtet.

Fernabfragbare Datenträger sind vorgesehen, von denen jeder einem Gut zugeordnet oder zuordenbar ist und Daten dieses Guts speichert, und mindestens ein Lesegerät ist vorhanden, das über den Datenträger die Daten des Guts und dessen Lagerplatz erfaßt und optisch und/oder akustisch anzeigt und/oder ausdruckt.

Als Datenträger werden Transponderelemente eingesetzt. Transponderelemente können durch die Lesevorrichtung ausgelesen werden, so daß sie eine automatische Erfassung der in dem Gefriergerät befindlichen Waren ermöglichen und die Daten im Wege einer berührungslosen Datenübertragung zwischen der Lesevorrichtung und dem Bediengerät übertragen werden können.

Die Lesevorrichtung wirkt mit Transponderelementen zusammen, wobei jeweils ein Transponderelement einer Ware zugeordnet ist bzw. auf der Ware aufgebracht ist und wobei auf den Transponderelementen ein Code abgespeichert ist, der von der Lesevorrichtung berührungslos erfaßbar ist. Über die berührungslose Datenübertragung sind zumindest die von der Lesevorrichtung erfaßten Codes von dem Gefriergerät zu dem Bediengerät übertragbar. Auf diese Weise ist es möglich, daß die in dem Gefriergerät befindlichen Waren auf dem Bediengerät angezeigt werden können. Aufgrund der berührungslosen Datenübertragung kann das Bediengerät vom Benutzer beispielsweise zum Einkaufen mitgeführt werden, so daß der Benutzer sich im Lebensmittelmarkt direkt einen Überblick über die im Gefriergerät befindlichen Lebensmittel verschaffen kann. Im Haus ermöglicht die berührungstose Datenübertragung eine benutzerfreundliche Bedienung des Bediengeräts unabhängig von dem Standort des Gefriergeräts.

Der gewerbliche Betreiber des erfindungsgemäßen Gefriergeräts kann sich auf einfache Weise einen Überblick über die in diesem noch vorhandenen Güter und deren Verfalldaten verschaffen und die erforderlichen Daten gleichsam zur inventarisierung ausdrucken, so daß er den Warenbestand einfach und schnell aktualisieren und Güter, die sich dem Verfallsdatum nähern, zum alsbaldigen Verkauf bereithalten kann.

Im Haushaltsbereich kann sich der Verbraucher einfach und schnell einen Überblick über die in seinem Gefriergerät vorhandenen Güter informieren, ohne zeitaufwendig und unter Energievergeudung durch Öffnen des Gefriergeräts und Herausziehen der Schubladen den Inhalt im einzelnen kontrollieren zu müssen.

Nach einer bevorzugten Ausführungsform ist vorgesehen, daß der Datenträger bereits herstellerseitig mit dem Gut verbunden ist. Auf diese Weise lassen sich die das Gut betreffenden Daten und insbesondere das Verfalldatum von Herstellzeitpunkt bis zum Verbrauchszeitpunkt überwachen.

Bei einer Einlagerung von Gütern, die beispielsweise aus dem eigenen Garten stammen, kann der Benutzer die Ware auch selbst kennzeichnen.

Zweckmäßigerweise ist der Datenträger frei programmierbar, so daß der Benutzer beim Einlagem das Gut betreffende Daten und den Lagerplatz selbst in den Datenträger einspeichern kann.

Um den Lagerort einfach und schnell erfassen zu können, ist zweckmäßigerweise jedem Fach und/oder jeder Schublade des Gefriergeräts eine Antenne zugeordnet, die die Daten des Datenträgers ausliest und dem Lesegerät zuführt.

Der Datenträger kann beliebiger geeigneter Art sein und muß in der Lage sein, die gespeicherten Daten zu senden, so daß sie aufgrund einer Femabfrage beispielsweise durch Antennen auslesbar sind. Derartige Datenträger stehen heute bereits zur Verfügung und es ist zu erwarten, daß diese in Zukunft als Pfennigartikel auf den Markt kommen, so daß sie ohne Verteuerung mit der zu kennzeichnenden Ware oder deren Verpackung verbunden werden können.

Um ein sicheres Auslesen der Transponderlelemente zu gewährleisten, sind diese parallel oder bis zu +/- 45° spitzwinkelig zu den einzelnen Antennen angeordnet. Es können auch jedem Fach oder jeder Schublade mehrere Antennen in der Weise zugeordnet werden, daß eine dreidimensionale Erfassung der Signale der Transponderelemente erfolgt und diese somit in jeder beliebigen Lage ausgelesen werden können.

Nach einer anderen Ausführungsform ist vorgesehen, daß nur eine Antenne bzw. zwei Antennen vorgesehen sind und die Transponderelemente dreidimensional, beispielsweise rechtwinkelig oder T-förmig ausgebildet sind.

Die berührungslose Datenübertragung erfolgt zweckmäßigerweise über eine Funkübertragungsstrecke. Seitens des Gefriergeräts ist dabei eine Funkstation vorgesehen, die aber nicht notwendigerweise in dem Gefriergerät integriert sein muß. Vielmehr kann es vorteilhaft sein, die Funkstation an einer exponierten Stelle für eine besonders günstige Funkverbindung zu installieren. In diesem Fall bietet es sich an, daß die Lesevorrichtung mit der Funkstation über das Hausnetz kommuniziert, da in der Regel sowohl das Gefriergerät als auch die Funkstation an das 220 Volt-Hausnetz angeschlossen sind. Alternativ zur berührungslosen Datenübertragung können die Daten auch an einer Docking-Station nach Einlegen des tragbaren Bediengerätes aktualisiert werden.

Nach einer bevorzugten Ausführungsform ist vorgesehen, daß das Bediengerät ein Handsender mit einem Mikrocomputer und einem Display ist, wobei die in dem Handsender empfangenen Codes über eine in den Mikrocomputer abgespeicherte Tabelle bestimmten Waren zugeordnet wird und die Waren auf dem Display alphanumerisch angezeigt werden. Handelt es sich bei den Waren beispielsweise um Lebensmittel, so erfolgt der Übersichtlichkeit halber eine Einteilung der Lebensmittel nach den am häufigsten einzukaufenden Lebensmitteln, also beispielsweise in 20 Lebensmittelgruppen.

Der in dem Bediengerät befindliche Mikrocomputer kann dabei noch weitere Servicefunktionen übernehmen. Beispielsweise kann das Bediengerät einen Hinweis in Form eines akustischen Alarms oder einer entsprechenden Anzeige auf dem Display ausgeben, daß bestimmte Lebensmittel in dem Gefriergerät nicht mehr vorrätig und daher neu einzukaufen sind. Ebenso ist es denkbar, daß die Anzeige der jeweils erfaßten Waren wahlweise nach bestimmten Kriterien erfolgt, also z.B. nach Menge oder Art der Waren.

Nach einer bevorzugten Ausführungsform ist vorgesehen, daß zu dem Bediengerät neben den von der Lesevorrichtung erfaßten Codes weitere Daten übertragen werden. Hierzu können beispielsweise das aktuelle Datum, die Innentemperatur oder weitere Alarmzustände des Gefriergeräts zählen. Soweit das aktuelle Datum bekannt ist, kann der Benutzer sich einen Überblick darüber verschaffen, wann bestimmte Lebensmittel aufzubrauchen sind. Außerdem kann über das Bediengerät ein entsprechender Alarm ausgegeben werden, wenn die Kühltemperatur für bestimmte Lebensmittel nicht der Solltemperatur entspricht oder wenn beispielsweise ein ungewöhnlich hoher Leistungsverbrauch seitens des Gefriergeräts auftritt.

Hinsichtlich der Lesevorrichtung und des mit der Lesevorrichtung zusammenwirkenden Transponderelements sind alle Ausgestaltungen denkbar, bei denen die Lesevorrichtung berührungslos bestimmte Unterscheidungsmerkmale an den Transponderelementen abfragen kann.

Eine Möglichkeit besteht darin, daß das Transponderelement aus einem elektrischen Schwingkreis besteht und daß die Lesevorrichtung ein elektromagnetisches Spulensystem umfaßt, mit dem ein elektromagnetisches Feld auf der Resonanzfrequenz des elektrischen Schwingkreises abkippbar ist. Sobald das elektromagnetische Feld auf der Resonanzfrequenz des Schwingkreises schwingt, wird der Schwingkreis seinerseits angeregt, was seitens der Lesevorrichtung wiederum durch das elektromagnetische Spulensystem ausgewertet werden kann. Die Resonanzfrequenz entspricht dabei einem bestimmten Code bzw. einem Unterscheidungsmerkmal, das in der oben beschriebenen Weise weiterverarbeitet werden kann. Die Transponderelemente enthalten zweckmäßigerweise zu ihrem durch ein elektrisches Feld aktivierbaren Spulensystem ein die Daten speicherndes Chip, beispielsweise ein EPROM.

Eine andere Möglichkeit besteht darin, daß das Transponderelement aus einem Oberflächenwellenfilter mit Reflektorelementen besteht und daß die Lesevorrichtung eine Sende-/Empfängervorrichtung umfaßt, wobei ein von der Lesevorrichtung ausgesendeter Sendeimpuls von dem Oberflächenwellenfilter empfangen und den Reflektorelementen entsprechend zeitversetzt und vervielfacht wieder zurückgesendet wird. Bei einem Oberflächenwellenfilter wird die empfangene elektromagnetische Schwingung auf ein Piezoelement geleitet, auf dem sich eine Oberflächenwelle ausbreiten kann. Auf dem Piezoelement sind wiederum Reflektorelemente aufgebracht, die die sich ausbreitende Oberflächenwelle reflektieren, wobei die reflektierte Welle in umgekehrter Weise wieder in elektromagnetische Strahlung umgewandelt und ausgesendet wird. Entsprechend der Positionierung der Reflektorelemente bestimmt sich damit der von dem Oberflächenwellenfilter zurückgesendete Code, der von der Lesevorrichtung mit einer geeigneten Empfängervorrichtung ausgewertet wird.

Damit eine Erkennung der Waren über den von der Lesevorrichtung erfaßbaren Code möglich ist, muß beim Einlegen der Ware in das Gefriergerät eine Zuordnung zwischen der Ware und dem jeweiligen Transponderelement erfolgen. Dies kann beispielsweise dadurch geschehen, daß jedes Transponderelement eine aufgedruckte Warenbezeichnung aufweist, wobei vor dem Einlegen einer Ware in das Gefriergerät auf die Ware ein Transponderelement mit der entsprechenden Warenbezeichnung aufgebracht wird. Das Transponderelement kann beispielsweise mit einem Gummiband an der Ware befestigt werden, so daß das Transponderelement nach Entnehmen der Ware wiederverwertbar ist.

Es ist inzwischen üblich geworden, Lebensmittel mit einem sogenannten Barcode zu kennzeichnen. Der Barcode enthält dabei genaue Informationen über die Art des Lebensmittels. Zur Zuordnung einer Ware zu einem entsprechenden Transponderelement kann es deshalb vorgesehen sein, daß die Lesevorrichtung einen Mikrocomputer umfaßt, an den ein Barcodeleser angeschlossen ist, wobei vor dem Einlegen einer Ware in das Gefriergerät über den Barcodeleser der auf der Ware aufgebrachte Barcode eingelesen und dem ebenfalls erfaßten Code des Transponderelements zugeordnet wird. Auf diese Weise entfällt die für den Benutzer ansonsten erforderliche Arbeit, ein passendes Transponderelement aus einem entsprechenden Vorrat herauszusuchen und dieses der Ware zuzuordnen. Vielmehr kann dem Benutzer eine Menge einheitlicher Transponderelemente zur Verfügung gestellt werden, ohne daß der Benutzer noch zwischen einzelnen Transponderelementen unterscheiden muß. Somit entfällt auch die ansonsten erforderliche Unterteilung in bestimmte Warengruppen, bei der im übrigen immer das Problem auftritt, daß bestimmte Waren keiner vorgesehenen Warengruppe zuzuordnen sind.

Soweit das Gefriergerät Schubladen umfaßt, ist nach einer bevorzugten Ausführungsform für jede Schublade eine Lesevorrichtung vorgesehen, mit der die Codes der in einer Schublade befindlichen Transponderelemente erfaßbar sind. Auf diese Weise erhält der Benutzer auf dem Bediengerät einen Überblick über die Waren in der jeweiligen Schublade. Ein Lesegerät ist vorgesehen. Die Schubladen werden nacheinander abgefragt.

Die Lesevorrichtung vermag nur den jeweiligen Lagerort der Ware zu erfassen, so daß bei einer Umschichtung von Ware in dem Gefriergerät die Verlagerung nur dadurch ermittelt werden kann, daß das Bediengerät, in dem der frühere Lagerort abgelegt war, anzeigt, daß entsprechende Verlagerung von Gut erfolgt ist.

Weitere Einzelheiten und Vorteile der Erfindung werden anhand zweier in der Zeichnung dargestellten Ausführungsbeispiele näher erläutert. In dieser zeigt:
- Fig. 1: ein Gefriergerät mit einer berührungslosen Datenübertragung zwischen einer Lesevorrichtung und einem Bediengerät und
- Fig. 2: ein Gefriergerät mit einer Busverbindung zu einer Datenverwaltung auf eine Steuer- bzw. Verwaltungseinheit und einem Bediengerät.

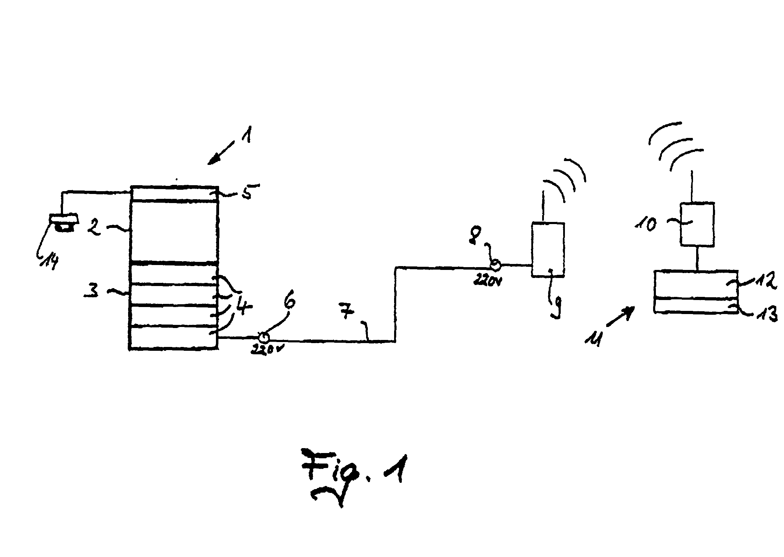

Fig. 1 zeigt ein Gefriergerät mit einer berührungslosen Datenübertragung zwischen einer Sendestation 9 und einem Empfängerteil 10. Das Gefriergerät 1 besteht aus einem Schubladenteil 3 mit Schubladen 2 und 4. Für jede Schublade 2 und 4 getrennt ist jeweils eine Lesevorrichtung vorgesehen, die mit Transponderelementen zusammenwirkt, die auf den jeweiligen in dem Gefriergerät gelagerten Lebensmitteln aufgebracht sind. Am oberen Rand des Gefriergeräts ist eine Steuereinheit 5 untergebracht, die das Zusammenspiel zwischen den jeweiligen Lesevorrichtungen und einer Sendestation 9 steuert. An die Steuereinheit 5 kann außerdem ein Barcodeleser 14 angeschlossen sein. Dieser kann aber auch entfallen.

Für Stromversorgung ist das Gefriergerät 1 in üblicher Weise an eine Steckdose 6 des 220 Volt-Hausnetzes angeschlossen. Ebenso ist auch die Sendestation 9 an eine Steckdose 8 angeschlossen, so daß über das Hausnetz 7 Daten zwischen der Sendestation 9 und der Steuereinheit 5 ausgetauscht werden können. Seitens des Bediengeräts 11 ist ein Empfängerteil 10 zum Empfangen der von der Sendestation 9 ausgesendeten Daten vorgesehen. Das Bediengerät 11 besteht dabei aus einem Display 12 und einer Tastatur 13.

Sobald der Benutzer neue Lebensmittel in das Gefriergerät einlagert, kann er diese, soweit er dies für erforderlich hält, mit entsprechend dafür vorgesehenen Transponderelementen kennzeichnen. Vor dem Einlegen des jeweiligen Lebensmittels in das Gefriergerät wird das Lebensmittel über den darauf befindlichen Barcode durch den Barcodeleser 14 erfaßt. Gleichzeitig liest die Lesevorrichtung den auf dem Transponderelement abgespeicherten Code ein. Die Zuordnung zwischen der aufgrund des Barcodes bekannten Lebensmittelbezeichnung und dem Code des Transponderelements erfolgt in der Steuereinheit 5. Die entsprechenden Daten werden sodann sofort über das Hausnetz 7 durch die Sendestation 9 ausgesendet. Das Empfangsteil 10 ist derart ausgestaltet, daß dieses immer in Empfangsbereitschaft ist, so daß die ausgesendeten Daten sofort empfangen und in dem Bediengerät 11 abgespeichert werden können.

Bei jeder Erfassung eines bestimmten Lebensmittels durch den Barcodeleser erfolgt somit unmittelbar die Übersendung der erfaßten Daten zum Bediengerät. Auf diese Weise ist es ausreichend, nur eine einseitige Funkverbindung von der Sendestation 9 zum Empfangsteil 10 vorzustehen, da seitens des Bedienteils 11 keine Anfragen in Richtung des Gefriergeräts 1 erforderlich sind. Dies hat wiederum den Vorteil, daß die ortsfeste Funkstation mit besonders hoher Leistung ausgeführt werden kann, während seitens des an sich klein zu haltenden Bediengeräts 11 ein kleines Empfangsteil 10 vorgesehen sein kann.

Die umgekehrte Erfassung von aus dem Gefrierschrank genommenen Lebensmitteln wird durch einen Schalter ausgelöst, der betätigt wird, sobald eine Tür des Gefriergeräts geöffnet wird. Hierdurch werden die Lesevorrichtungen aktiviert und überwachen eine Entnahme der in dem Gefriergerät befindlichen Lebensmittel, sobald die Tür des Gefriergeräts wieder geschlossen ist. Die Aktualisierung der auf dem Bediengerät befindlichen Daten erfolgt in der oben beschriebenen Weise.

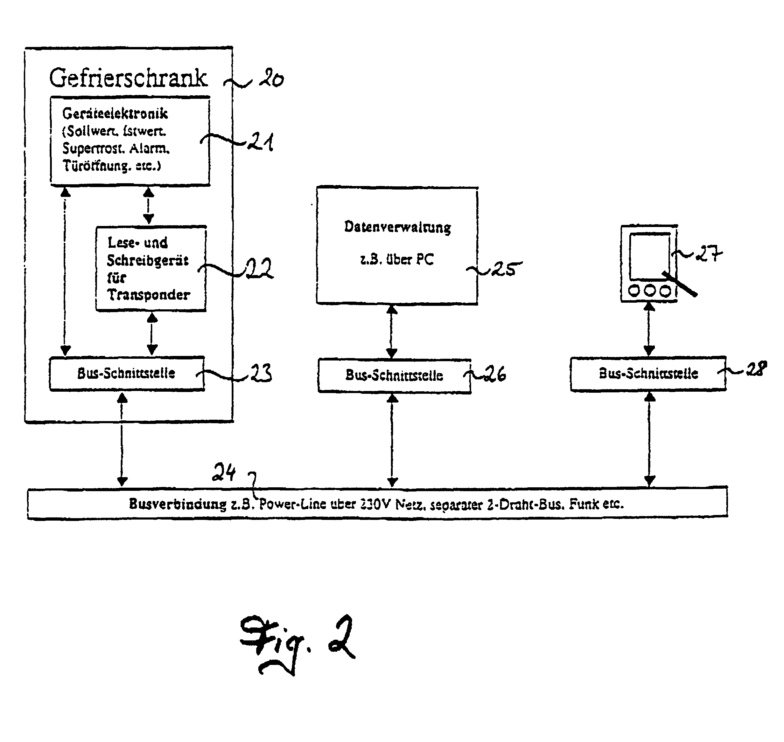

Fig. 2 zeigt ein Gefriergerät mit einer Busverbindung zu einer Datenverwaltung auf einem PC und einem Bediengerät. Gegenüber dem Gefriergerät gemäß Fig. 1 unterscheidet sich dieses Gefriergerät im wesentlichen dadurch, daß zur Bedienung und Datenverwaltung sowohl ein stationärer PC 25 als auch ein tragbares Bediengerät 27 vorgesehen sind. Bei dem Bediengerät 27 kann es sich beispielsweise um einen sogenannten Palmtopp handeln. Der PC 25 und das Bediengerät 27 sind über eine gemeinsame Busverbindung 24 mit dem Gefriergerät 20 verbunden. Die Busverbindung kann dabei zwischen den einzelnen Komponenten in unterschiedlicher Form ausgeführt sein. Beispielsweise ist zwischen dem Gefriergerät 20 und dem PC 25 die oben beschriebene Kommunikation über das 220V-Hausnetz vorgesehen, während zwischen dem PC 25 und dem Bediengerät 27 eine Funkverbindung vorgesehen ist. Der Gefrierschrank 20, der PC 25 sowie der Palmtopp 27 verfügen zur Ankopplung an den Bus jeweils über Bus-Schnittstellen 23, 26 und 28. In dem Gefrierschrank ist wie oben beschrieben eine Geräteelektronik 21 vorgesehen, die zum einen ein Lese- und Schreibgerät für die Transponder steuert und zum anderen weitere Funktionen, wie beispielsweise Türüberwachung, Alarmfunktion, Temperaturregelung usw. umfaßt. Der PC 25 und das Bediengerät 27 haben grundsätzlich die gleiche Funktion und Aufgabe, die in dem Gefriergerät 20 gelagerten und mit Transpondern gekennzeichneten Lebensmittel zu verwalten und anzuzeigen. Gegenüber dem Bediengerät 27 können auf dem PC 25 allerdings komfortable Anzeigen- und Bedienfunktionen vorgesehen sein. Darüber hinaus kann der PC zusätzliche Aufgaben, wie beispielsweise eine automatische Nachbestellung von Lebensmitteln per Telefax oder per E-mail, übernehmen.

## Patentansprüche

1. Gefriergerät (1) mit Fächern und/oder Schubladen (2, 4) zum Einlegen tiefgefrorener Lebensmittel, wobei
das Gefriergerät eine Lesevorrichtung umfaßt, die einen Code berührungslos erfassen kann, der auf femabfragbaren Datenträgern abgespeichert ist, die in Form von Transponderelementen vorgesehen sind, von denen jeder einem Lebensmittel zugeordnet oder zuordenbar ist, und
eine berührungslose Datenübertragung (9, 10) zwischen der Lesevorrichtung und einem Bediengerät (11) vorgesehen ist, über die zumindest die von der Lesevorrichtung erfaßten Codes zu dem Bediengerät übertragbar sind.

2. Gefriergerät nach Anspruch 1, **dadurch gekennzeichnet, daß** der Datenträger herstellerseitig mit dem Gut verbunden ist oder manuell vom Benutzer mit dem Gut verbindbar ist.

3. Gefriergerät nach Anspruch 1 oder 2, **dadurch gekennzeichnet, daß** der Datenträger frei programmierbar ist.

4. Gefriergerät nach einem der Ansprüche 1 bis 3, **dadurch gekennzeichnet, daß** jedem Fach und/oder jeder Schublade eine Leseantenne oder ein Lesegerät zugeordnet ist.

5. Gefriergerät nach Anspruch 4, **dadurch gekennzeichnet, daß** die Transponderelemente dreidimensional, z.B. rechtwinkelig oder T-förmig, ausgebildet sind.

6. Gefriergerät nach einem der Ansprüche 1 bis 5, **dadurch gekennzeichnet, daß** die berührungslose Datenübertragung über eine Funkübertragungsstrecke erfolgt.

7. Gefriergerät nach Anspruch 6, **dadurch gekennzeichnet, daß** eine Funkstation vorgesehen ist, die mit dem Lesevorrichtung über das Hausnetz und mit dem Bediengerät über die Funkübertragungsstrecke kommuniziert.

8. Gefriergerät nach einem der Ansprüche 1 bis 7, **dadurch gekennzeichnet, daß** das Bediengerät ein Handsender mit einem Mikrocomputer und einem Display ist, wobei die in dem Handsender empfangenen Codes über eine in dem Mikrocomputer abgespeicherte Tabelle bestimmten Waren zugeordnet wird und die Waren auf dem Display alphanumerisch angezeigt werden.

9. Gefriergerät nach einem der Ansprüche 1 bis 8, **dadurch gekennzeichnet, daß** zu dem Bediengerät neben den von der Lesevorrichtung erfaßten Codes das aktuelle Datum und/oder die Innentemperatur und/oder weitere Alarmzustände des Gefriergeräts übertragen werden.

10. Gefriergerät nach einem der Ansprüche 1 bis 9, **dadurch gekennzeichnet, daß** das Transponderelement aus einem elektrischen Schwingkreis besteht und daß die Lesevorrichtung ein elektromagnetisches Spulensystem umfaßt, mit dem ein elektromagnetisches Feld auf der Resonanzfrequenz des elektrischen Schwingkreises abgebbar ist.

11. Gefriergerät nach einem der Ansprüche 1 bis 9, **dadurch gekennzeichnet, daß** das Transponderelelement aus einem Oberflächenwellenfilter mit Reflektorelementen besteht und daß die Lesevorrichtung eine Sende-/Empfängervorrichtung umfaßt, wobei ein von der Lesevorrichtung ausgesendeter Sendeimpuls von dem Oberflächenwellenfilter empfangen und den Reflektorelementen entsprechend zeitversetzt und vervielfacht wieder zurückgesendet wird.

12. Gefriergerät nach einem der Ansprüche 1 bis 11, **dadurch gekennzeichnet, daß** jedes Transponderelement eine aufgedruckte Warenbezeichnung aufweist, wobei vor dem Einlegen einer Ware in das Gefriergerät auf die Ware ein Transponderelement mit der entsprechenden Warenbezeichnung aufgebracht wird.

13. Gefriergerät nach einem der Ansprüche 1 bis 11, **dadurch gekennzeichnet, daß** die Lesevorrichtung einen Mikrocomputer umfaßt, an den ein Barcodeleser angeschlossen ist, wobei vor dem Einlegen einer Ware in das Gefriergerät über den Barcodeleser der auf der Ware aufgebrachte Barcode eingelesen und dem ebenfalls erfaßten Code des Transponderelements zugeordnet wird.

14. Gefriergerät nach einem der Ansprüche 1 bis 13, **dadurch gekennzeichnet, daß** das Gefriergerät ein Gefrierabteil mit Schubladen umfaßt, wobei für jede Schublade eine Lesevorrichtung vorgesehen ist, mit dem die Codes der in einer Schublade befindlichen Transponderelemente erfaßbar sind.

15. Gefriergerät nach Anspruch 14, **dadurch gekennzeichnet, daß** auf den Transponderelementen jeweils Nummern gespeichert sind und daß die zu diesen Nummern gehörige Information auf der Verwaltungseinheit (PC) gespeichert ist und dadurch der jeweiligen Nummer zuordenbar ist.

16. Gefriergerät nach einem der Ansprüche 1 bis 15, **dadurch gekennzeichnet, daß** zwischen dem Gefriergerät und dem Bediengerät eine Busverbindung vorgesehen ist, an die wahlweise weitere Datenverarbeitungsgeräte anschließbar sind.

## Claims

1. Freezer (1) with compartments and/or drawers (2, 4) for depositing deep-frozen items of food,
the freezer comprising a reading device which can contactlessly pick up a code which is stored on data media which can be remotely interrogated and are provided in the form of transponder elements, each of which is assigned or can be assigned to an item of food, and
a contactless data transmission (9, 10) is provided between the reading device and an operator control device (11), by means of which at least the codes picked up by the reading device can be transmitted to the operator control device.

2. Freezer according to Claim 1, **characterized in that** the data medium is connected to the item at the manufacturer's or can be connected to the item manually by the user.

3. Freezer according to Claim 1 or 2, **characterized in that** the data medium is freely programmable.

4. Freezer according to one of Claims 1 to 3, **characterized in that** each compartment and/or each drawer is assigned a reading antenna or a reading device.

5. Freezer according to Claim 4, **characterized in that** the transponder elements are formed in a three-dimensional, for example rectangular or T-shaped, manner.

6. Freezer according to one of Claims 1 to 5, **characterized in that** the contactless data transmission takes place via a radio transmission link.

7. Freezer according to Claim 6, **characterized in that** a radio station which communicates with the reading device via the in-house network and with the operator control device via the radio transmission link is provided.

8. Freezer according to one of Claims 1 to 7, **characterized in that** the operator control device is a hand-held transmitter with a microcomputer and a display, the codes received in the hand-held transmitter being assigned to specific products by means of a table stored in the microcomputer and the products being displayed alphanumerically on the display.

9. Freezer according to one of Claims 1 to 8, **characterized in that**, in addition to the codes picked up by the reading device, the current date and/or the inside temperature and/or further states of alarm of the freezer are transmitted to the operator control device.

10. Freezer according to one of Claims 1 to 9, **characterized in that** the transponder element comprises an electrical oscillating circuit and **in that** the reading device comprises an electromagnetic coil system, with which an electromagnetic field at the resonant frequency of the electrical oscillating circuit can be emitted.

11. Freezer according to one of Claims 1 to 9, **characterized in that** the transponder element comprises a surface-wave filter with reflector elements and **in that** the reading device comprises a transceiver device, a transmission pulse transmitted by the reading device being received by the surface-wave filter and transmitted back again to the reflector elements in a correspondingly time-shifted and multiplied manner.

12. Freezer according to one of Claims 1 to 11, **characterized in that** each transponder element has a printed-on product designation, a transponder element with the corresponding product designation being applied to a product before the product is deposited in the freezer.

13. Freezer according to one of Claims 1 to 11, **characterized in that** the reading device comprises a microcomputer, to which a barcode reader is connected, the barcode applied to the product being read in by means of the barcode reader and assigned to the likewise picked-up code of the transponder element before a product is deposited in the freezer.

14. Freezer according to one of Claims 1 to 13, **characterized in that** the freezer comprises a freezer section with drawers, a reading device with which the codes of the transponder elements located in a drawer can be picked up being provided for each drawer.

15. Freezer according to Claim 14, **characterized in that** numbers are respectively stored on the transponder elements and **in that** the information belonging to these numbers is stored on the administration unit (PC) and as a result can be assigned to the respective number.

16. Freezer according to one of Claims 1 to 15, **characterized in that** a bus connection to which further data processing devices can optionally be connected is provided between the freezer and the operator control device.

## Revendications

1. Congélateur (1) avec des compartiments et/ou tiroirs (2, 4) pour stocker des aliments congelés, où
le congélateur comporte un dispositif de lecture qui peut détecter sans contact un code qui est stocké sur des supports de données pouvant être interrogés à distance, qui sont prévus sous la forme d'éléments de répondeur d'identification, dont chacun est associé ou peut être associé à un aliment et
est prévue une transmission de données sans contact (9, 10) entre le dispositif de lecture et un appareil de commande (11) , par laquelle peuvent être transférés au moins les codes détectés par le dispositif de lecture à l'appareil de commande.

2. Congélateur selon la revendication 1, **caractérisé en ce que** le support de données, côté fabricant, est relié aux aliments ou peut être relié manuellement par l'utilisateur aux aliments.

3. Congélateur selon la revendication 1 ou 2, **caractérisé en ce que** le support de données peut être programmé librement.

4. Congélateur selon l'une des revendications 1 à 3, **caractérisé en ce qu'**il est associé à chaque compartiment et/ou à chaque tiroir une antenne de lecture ou un appareil de lecture.

5. Congélateur selon la revendication 4, **caractérisé en ce que** les éléments de répondeur d'identification sont réalisés d'une manière tridimensionnelle, par exemple rectangulaire ou en forme de T.

6. Congélateur selon l'une des revendications 1 à 5, **caractérisé en ce que** la transmission des données sans contact a lieu par liaison radio.

7. Congélateur selon la revendication 6, **caractérisé en ce qu'**un poste radio est prévu qui communique avec le dispositif de lecture par le secteur et avec l'appareil de commande par la liaison radio.

8. Congélateur selon l'une des revendications 1 à 7, **caractérisé en ce que** l'appareil de commande est un émetteur à main avec un micro-ordinateur et un écran d'affichage, où les codes reçus dans l'émetteur à main sont associés par un tableau stocké dans le micro-ordinateur à certains produits, et les produits sont affichés sur l'écran d'affichage de manière alphanumérique.

9. Congélateur selon l'une des revendications 1 à 8, **caractérisé en ce que** sont transférés à l'appareil de commande, à part les codes détectés par le dispositif de lecture, la date actuelle et/ou la température intérieure et/ou d'autres états d'alarme du congélateur.

10. Congélateur selon l'une des revendications 1 à 9, **caractérisé en ce que** l'élément de répondeur d'identification est constitué d'un circuit oscillant électrique, et **en ce que** le dispositif de lecture comprend un système à bobines électromagnétique, au moyen duquel un champ électromagnétique peut être émis sur la fréquence de résonance du circuit oscillant électrique.

11. Congélateur selon l'une des revendications 1 à 9, **caractérisé en ce que** l'élément de répondeur d'identification est constitué d'un filtre d'ondes de surface avec des éléments de réflexion, et **en ce que** le dispositif de lecture comprend un dispositif d'émission/de réception, où une impulsion d'émission émise par le dispositif de lecture est reçue par le filtre d'ondes de surface et est renvoyée aux éléments de réflexion avec un décalage correspondant dans le temps et en étant multipliée.

12. Congélateur selon l'une des revendications 1 à 11, **caractérisé en ce que** chaque élément de répondeur d'identification présente une désignation de produit imprimée, où avant l'introduction d'un aliment dans le congélateur, on applique sur l'aliment un élément de répondeur d'identification avec la désignation correspondante de l'aliment.

13. Congélateur selon l'une des revendications 1 à 11, **caractérisé en ce que** le dispositif de lecture comprend un micro-ordinateur auquel est connecté un lecteur de code à barres, où avant l'introduction d'un aliment dans le congélateur, par le lecteur du code à barres, le code à barres appliqué à l'aliment est lu, et est associé au code également détecté de l'élément de répondeur d'identification.

14. Congélateur selon l'une des revendications 1 à 13, **caractérisé en ce que** le congélateur comprend une partie de congélation avec des tiroirs, où est prévu pour chaque tiroir un dispositif de lecture au moyen duquel les codes des éléments de répondeur d'identification se trouvant dans le tiroir peuvent être détectés.

15. Congélateur selon la revendication 14, **caractérisé en ce que** sur les éléments de répondeur d'identification sont stockés respectivement des numéros, et **en ce que** l'information associée à ces numéros est stockée sur l'unité de gestion (PC) et peut donc être associée ainsi au numéro respectif.

16. Congélateur selon l'une des revendications 1 à 15, **caractérisé en ce qu'**il est prévu entre le congélateur et l'appareil de commande une liaison à bus à laquelle peuvent être connectés sélectivement d'autres appareils de traitement de données.
